# EUROPEAN PATENT APPLICATION

(11) **EP 3 747 673 A1**
(43) Date of publication of application: **09.12.2020**
(21) Application number: 19397520.8
(22) Date of filing: 05.06.2019
(51) Int. Cl.: B60C 11/13, B60C 11/24, B60C 11/11

(54) **PNEUMATIC VEHICLE TYRE COMPRISING A WEAR INDICATOR**

(71) Applicant: Nokian Raskaat Renkaat Oy, 37101 Nokia (FI)
(72) Inventor: Saari, Tero, 33960 Pirkkala (FI); Claassen, Caleb, 33210 Tampere (FI)
(74) Representative: Berggren Oy, Tampere

(57) **Abstract**

A pneumatic vehicle tyre comprising a tread (3) extending around the tyre (1) in a circumferential direction (Cd) of the tyre and including an outer load-bearing surface (4) facing radially outwards and constituting a radially outermost ground-engaging surface. The outer load-bearing surface (4) comprises one or more wear-indicating protrusions (2) or groups of wear-indicating protrusions (2) extending radially outwards from the outer load-bearing surface (4) and thereby being adapted to be subject to wear immediately after the tyre (1) has been commissioned into use. In an example, adjacent to the wear-indicating protrusion (2) there is an indentation (8) extending radially inwards. In an example, the wear-indicating protrusion (2) comprises wear-indicating sections (2a, 2b, 2c) stacked on top of each other in a stepped fashion.

## Description

### Field of the solution

The presented solution relates to pneumatic vehicle tyres and particularly wear-indicating arrangements in such tyres.

### Background of the solution

It is generally desirable that a tyre wears evenly or nearly evenly across the whole surface area of the load-bearing surface of the tread of the tyre. Usually this is desirable in order to, for example, maximize the longevity of the tyre and/or maximize the traction of the tread over the lifetime of the tyre when the tread does not wear more pronouncedly in some places and less pronouncedly in some other places.

Such even wear is compromised if the inflation pressure of the tyre is inappropriate for the load to which the tyre is subjected. For example, if the tyre is over-inflated in relation to the load the tyre bears, the axially outer regions of the load-bearing surface of the tread may have little or no contact with the ground, resulting in uneven wear.

Such correct inflation pressure in relation to the load of the tyre is especially crucial in tyres which are subject to great variability in loads they bear. Such is the case in, for example, heavy tyres for vehicles such as tractor trailers, agricultural vehicles, tractors or forestry machines.

With inflation pressure measurement-based methods, it is difficult to ascertain correct inflation pressure for any given actual usage context because the correct pressure is load-dependent, necessitating measuring load as well which is usually a non-straightforward undertaking.

Hence, there is a need for an arrangement with which correct inflation pressure of a tyre in relation to the load it bears can be ascertained with ease and without specialized apparatuses, so that even wear of the tyre can be ensured. The purpose of the disclosed solution is to address such a need.

### Summary of the presented solution

The disclosed solution relates to detecting wear of a pneumatic vehicle tyre and, by those means, the correctness of inflation pressure of the tyre in relation to the load it bears to ensure even wear of the tyre.

Specifically, the disclosed solution relates to a pneumatic vehicle tyre and is defined by the independent claim 1. Other claims define further examples and variations of the disclosed solution.

The disclosed solution is premised on protrusions on the outer load-bearing surface of the tread of the tyre which, through their wear or lack thereof, indicate wear of the corresponding areas of the load-bearing surface of the tread.

In the presented solution, the pneumatic vehicle tyre comprises a tread extending around the tyre in a circumferential direction of the tyre and including an outer load-bearing surface facing radially outwards and constituting a radially outermost ground-engaging surface of the tyre. The outer load-bearing surface comprises one or more wear-indicating protrusions or groups of wear-indicating protrusions extending radially outwards from the outer load-bearing surface and thereby being adapted to be subject to wear immediately after the tyre has been commissioned into use.

According to an example, adjacent to at least one of the wear-indicating protrusions or groups of wear-indicating protrusions there is an indentation extending radially inwards from the outer load-bearing surface, the indentation thereby being adapted to indicate that the wear-indicating protrusion or group of wear-indicating protrusions is or has been located nearby.

According to a further example, at least one of the wear-indicating protrusions comprises wear-indicating sections stacked on top of each other in a stepped fashion and including at least a first section and a second section such that the first and second sections reside radially outwards from the load-bearing surface. The second section is radially more distant from the load-bearing surface than the first section, the first section thereby being adapted to wear out after the second section has worn out.

### Brief description of the figures

Figure 1 schematically illustrates, according to an example of the presented solution, a tyre comprising wear-indicating protrusions.
Figure 2 schematically illustrates, according to another example of the presented solution, a tyre comprising wear-indicating protrusions.
Figure 3a schematically illustrates, according to an example of the presented solution, a partial cross-section of a tyre; exhibiting a tread of the tyre and a wear-indicating protrusion.
Figure 3b schematically illustrates, according to an example of the presented solution, a partial cross-section of a tyre; exhibiting a tread of the tyre and a wear-indicating insert comprising a protruding part.
Figure 3c schematically illustrates, according to an example of the presented solution, a partial cross-section of a tyre; exhibiting a tread of the tyre, a wear-indicating protrusion and an indentation adjacent to the wear-indicating protrusion.
Figure 3d schematically illustrates, according to an example of the presented solution, a partial cross-section of a tyre; exhibiting a tread of the tyre and a two-part wear-indicating protrusion.
Figure 3e schematically illustrates, according to an example of the presented solution, a partial cross-section of a tyre; exhibiting a tread of the tyre and a two-part wear-indicating protrusion.
Figure 3f schematically illustrates, according to an example of the presented solution, a partial cross-section of a tyre; exhibiting a tread of the tyre, a two-part wear-indicating protrusion and an indentation adjacent to the wear-indicating protrusion.
Figure 3g schematically illustrates, according to an example of the presented solution, a partial cross-section of a tyre; exhibiting a tread of the tyre comprising grooves plus wear-indicating protrusions on an island between grooves.
Figure 3h schematically illustrates, according to an example of the presented solution, a partial cross-section of a tyre; exhibiting a tread of the tyre comprising grooves plus, between grooves, a three-part wear-indicating protrusion on an island and an indentation adjacent to the wear-indicating protrusion.
Figure 4a schematically illustrates, according to an example of the presented solution, a cross-section of a tyre in a state in which the entire width of the load-bearing surface of the tread is in contact with ground.
Figure 4b schematically illustrates the tyre of Fig. 4a in a state in which only part of the width of the load-bearing surface of the tread is in contact with ground.
Figure 5a schematically illustrates, according to an example of the presented solution, a cross section of a tyre comprising wear-indicating protrusions.
Figure 5b schematically illustrates, according to an example of the presented solution, a cross section of a tyre with a tread divided into islands by grooves plus wear-indicating protrusions on islands.
Figure 5c schematically illustrates, according to an example of the presented solution, a cross section of a tyre with tread comprising wear-indicating inserts wherein each wear-indicating insert comprises a protruding part.
Figure 6a schematically illustrates, according to an example of the presented solution, a partial close-up of a tyre comprising wear-indicating protrusions arranged on islands.
Figure 6b schematically illustrates, according to an example of the presented solution, a partial close-up of a tyre comprising wear-indicating protrusions arranged on islands.
Figure 7a schematically illustrates, according to an example of the presented solution, a partial close-up of a tyre comprising wear-indicating protrusions arranged on islands and indentations adjacent to the wear-indicating protrusions.
Figure 7b schematically illustrates, according to an example of the presented solution, a partial close-up of a tyre comprising a wear-indicating protrusion arranged on island and an indentation adjacent to the wear-indicating protrusion.
Figure 7c schematically illustrates, according to an example of the presented solution, a partial close-up of a tyre comprising a two-part wear-indicating protrusion arranged on island and an indentation adjacent to the wear-indicating protrusion.

### Detailed description of the presented solution

Reference will now be made to the examples of which are illustrated in the accompanying drawings. Wherever possible, the same or corresponding reference numbers will be used throughout the drawings to refer to the same or corresponding parts or features.

The figures are intended for illustrating examples of the disclosed solution. Therefore, the figures are not in scale or suggestive of a definite layout of system components.

In the text, reference is made to the figures with the following reference numbers and denotations:
- 1: Tyre
- 2: Wear-indicating protrusion
- 2a, 2b, 2c: Sections of a wear-indicating protrusion
- 3: Tread
- 4: Load-bearing surface of the tread
- 5: Island of the tread
- 6: Groove
- 7: Insert
- 7a: Protruding part of the insert
- 8: Indentation
- 10: Side wall of the protrusion
- 11: Side wall of the indentation
- 12: Ground
- Ad: Axial direction
- Cd: Circumferential direction
- CL: Equatorial plane
- d: Depth of the indentation
- dOP-CL: Distance from an axial outer perimeter to the equatorial plane
- h: Protruding height of the protrusion
- Ia: Axial length of the protrusion
- Ic: Circumferential length of the protrusion
- OP: Axial outer perimeter of the tread
- Pc: Circumferential surface
- PR: Protrusion-containing region of the tread
- Rd: Radial direction
- t: Thickness of the tread
- wPR: Width of the protrusion-containing region

This description deals with a pneumatic vehicle tyre that is adapted to be in contact with the ground. The tyre is filled with a gas, such as air, e.g. by means of an inner tube or without it. The ground-engaging tread of the tyre is provided on the circumference of the tyre and constitutes an endless surface in the circumferential direction of the tyre, making it possible for the tyre to roll forward.

The disclosed solution relates to detecting wear of a pneumatic vehicle tyre and, by those means, the correctness of inflation pressure of the tyre in relation to the load it bears.

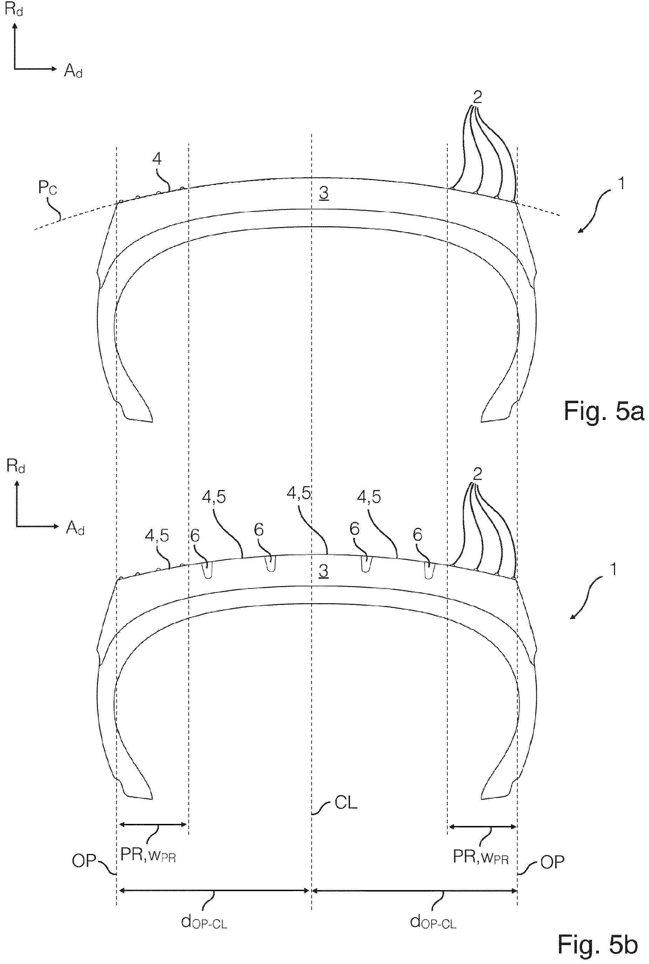

As is known, and as illustrated in Figs. 5a and 5b, a pneumatic vehicle tyre 1 (also referred to herein as a "tyre") in a typical configuration comprises a tread 3 extending around the tyre 1 in a circumferential direction Cd of the tyre and including an outer load-bearing surface 4 facing radially outwards, in a radial direction Rd, and constituting a radially outermost ground-engaging surface of the tyre 1.

Furthermore, the load-bearing surface 4 of the tread 3 may define a thickness t and/or a curved circumferential surface Pc. Furthermore, the outer load-bearing surface 4 defines in an axial direction Ad of the tyre 1 a width bounded by axial outer perimeters OP on both sides of the load-bearing surface 4. Furthermore, the outer load-bearing surface 4 further defines an imaginary, radially extending equatorial plane CL that is perpendicular to the axial direction Ad and passes through a centre region of the tread 3.

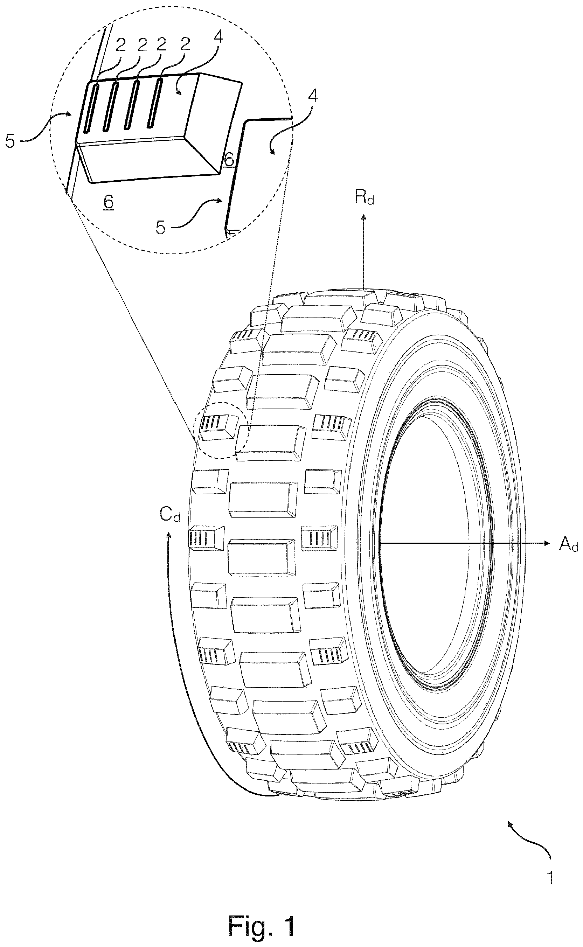

Herein, and elsewhere, the circumferential surface Pc is to be understood as that plane which is defined by the load-bearing surface 4, as illustratively denoted in Fig. 5a. Therein, any possible grooves 6 or other surface features extending radially inwards from the load-bearing surface 4 are not to be considered as defining or participating in defining the circumferential surface Pc. The axial outer perimeters OP are to be understood as the axially outermost edges of the load-bearing surface 4 extending in the circumferential direction Cd (see e.g. Fig. 1).

In particular, the disclosed solution relates to detecting, by means of a wear indicator, whether and/or to what degree the tyre 1 exhibits wear behavior as intended by the manufacturer. Usually, such intended wear behavior means that the load-bearing surface 4 of the tyre 1 is to wear evenly or nearly evenly across the whole surface area of the load-bearing surface 4. Usually this is intended in order to, for example, maximize the longevity of the tyre 1 and/or maximize the traction of the tread 3 over the lifetime of the tyre 1, when the tread 3 does not wear more pronouncedly in some places and less pronouncedly in some other places.

As is described more in detail further below, the disclosed solution may be applied to detect intended wear of a particular area of the tyre 1 at and in the vicinity of the axial outer perimeters OP of the tyre 1 in particular.

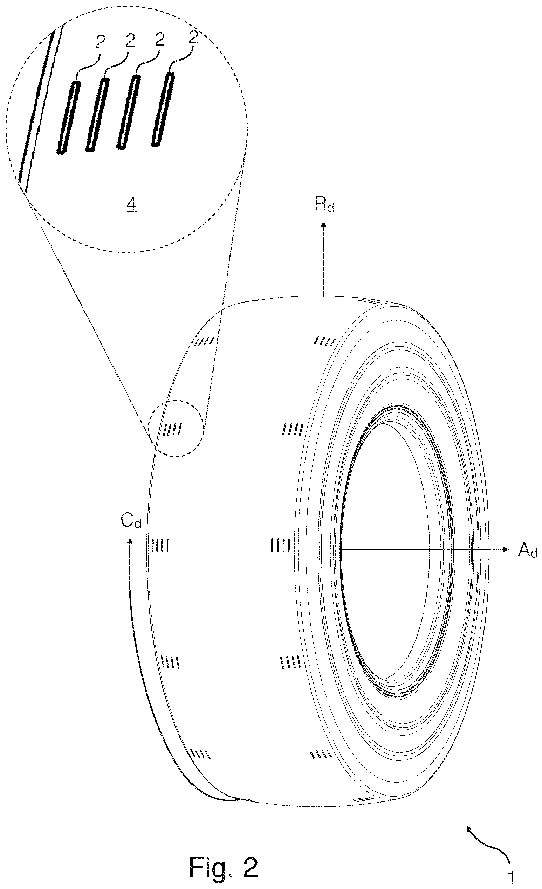

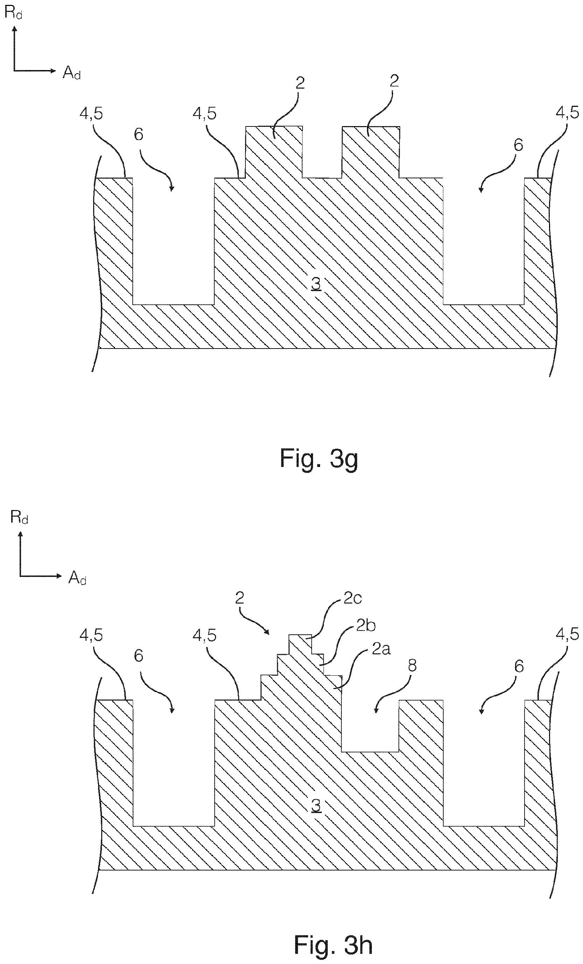

Referring to Figs. 1 and 2, the disclosed solution may be employed to detect uneven wear of the tyre 1, namely the wear of the load-bearing surface 4 of its tread 3, by configuring the tyre 1 such that the outer load-bearing surface 4 comprises a wear indicator in the form of at least one wear-indicating protrusion 2 or group of wear-indicating protrusions 2, the wear-indicating protrusion 2 extending radially outwards from the load-bearing surface 4. Herein, and with reference to Figs. 3g and 3h in particular, it is to be appreciated that for the wear-indicating protrusion 2 to detect wear of the load-bearing surface 4, the wear-indicating protrusion 2 is to reside expressly on the load-bearing surface 4, i.e. to extend from the load-bearing surface 4 radially outwards, instead of residing e.g. in a groove 6 in the tread 3 or on a side wall of the tyre 1 which is outside the load-bearing surface 4 of the tyre 1. The wear-indicating protrusion 2 is thereby adapted to be subject to wear immediately after the tyre 1 has been commissioned into use.

Therefore, according to an example, the wear-indicating protrusion 2 and/or group of wear-indicating protrusions 2 is nearer to one of the axial outer perimeters OP than the equatorial plane CL and thereby arranged in a region of the tread 3 tending to curve away from the ground 12 when the tyre 1 is over-inflated when commissioned into use.

According to an example as shown in Figs. 1 and 2, to enable detection of uneven wear of the tyre 1, two or more of the wear-indicating protrusions 2 or groups of wear-indicating protrusions 2 are in the axial direction Ad positioned at differing distances from the equatorial plane CL.

Preferably, as shown in Figs. 1 and 2, the wear-indicating protrusion 2 or group of wear-indicating protrusions 2 is on all sides encircled by the outer load-bearing surface 4.

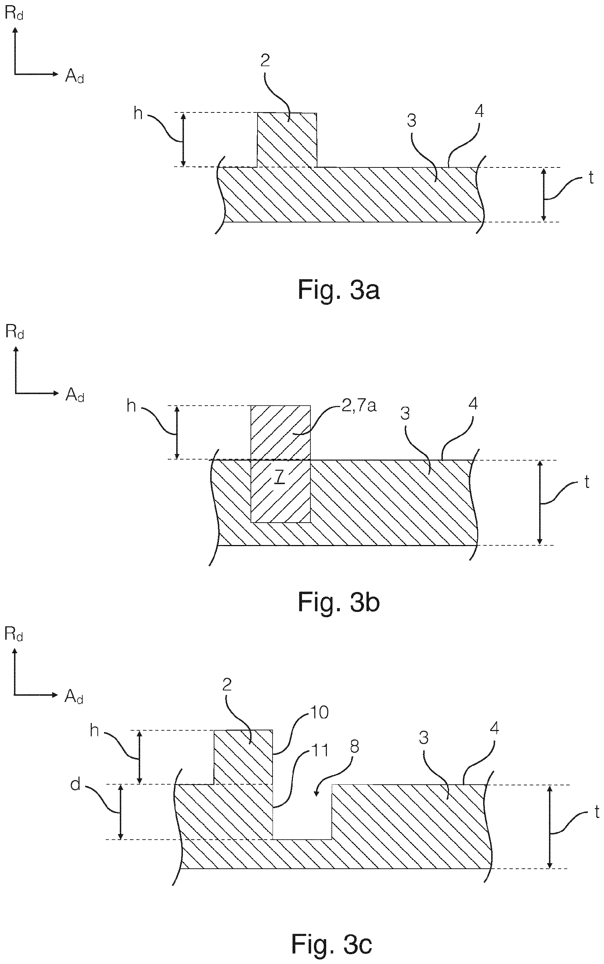

As illustrated in Figs. 3a to 3f, the wear-indicating protrusions 2 are preferably to have a protruding height h such that, on one hand, each wear-indicating protrusion 2 may be effortlessly visually detected and inspected, and, on the other hand, each wear-indicating protrusion 2 does not notably interfere with the intended traction-producing properties of the tread 3. Towards this end, the wear-indicating protrusion 2 may have, for example, a protruding height h of at least 0.2 mm, 0.4 mm, 0.6 mm, 0.8 mm, or 1.0 mm, and/or not more than 1.2 mm, 1.4 mm, 1.6 mm, 1.8 mm, or 2.0 mm. The protruding height h is measured from the load-bearing surface 4 radially, i.e. along the radial direction Rd, outwards.

According to an example the wear indicator exhibits wear rate which closely matches the wear rate of the tyre 1 whose wear is to be indicated. Herein, the hardness of the tyre 1 in the Shore hardness scale may be used as a good proxy measure of its wear rate. Therefore, according to an example, each wear-indicating protrusion 2 has a Shore hardness of 80% to 120%, more preferably 90% to 110%, and most preferably 95% to 105% of the Shore hardness of the tread 3 of the tyre 1.

Thereby, the wear rate of the tyre 1 at different particular regions of the load-bearing surface 4 may be observed by observing the wear of the wear-indicating protrusions 2 at different particular regions of the load-bearing surface 4. In particular, this may be advantageously performed during the early life of the tyre 1 after its commissioning into use. In such a case, the protrusion 2 indicates wear immediately after the tyre 1 has been subjected to any wear in use - that is, if any given wear-indicating protrusion 2 has been in contact with the ground 12 and thereby worn - whereby the evenness of wear of the tyre 1 may be observed already very shortly after the tyre 1 has been commissioned into use. In the case the wear-indicting protrusion 2 has low protruding height h, the wear-indicating protrusions 2 may intendedly wear away after a suitable run-in period in the life of the tyre 1 once the evenness of wear has been ascertained.

Thereby, according to the above-described example, the wear-indicating protrusion 2 may be productively employed as an indicator of evenness of wear of the tread 3 only during the early life of the tyre 1, whereafter the wear-indicating protrusion 2 may intendedly wear away so as to not have any subsequent influence on the surface properties of the tyre 1 during the rest of the life of the tyre 1.

According to an example, only a relatively small proportion of the total surface area defined by the load-bearing surface 4 is covered by the wear-indicating protrusions 2 in order to limit the influence of the wear-indicating protrusions 2 on the surface properties such as the traction-producing properties of the tread 3. Such surface properties may be, depending on application, premised on the tread 3 comprising discrete islands 5 and grooves 6 as illustrated in Fig. 1 or the tread 3 being devoid of the discrete islands 5 and grooves 6 as illustrated in Fig. 2. Nonetheless, towards such an end, less than 2%, 1.5%, or 1.0%, of the total surface area defined by the load-bearing surface 4 may be covered by the wear-indicating protrusions 2.

As the wear-indicating protrusions 2 are, according to the disclosed solution, to reside on the load-bearing surface 4 of the tread 3, it may be desirable in some applications or circumstances to be able to detect also those regions of the load-bearing surface 4 where the wear-indicating protrusions 2 have already worn out. That is, it may be desirable to observe those regions where there no longer are wear-indicating protrusions 2 but where there earlier were such protrusions 2. This may be beneficial, for example, in order to compare the wear rates at different regions of the load-bearing surface 4 after such a period of use of the tyre 1 during which at least some of the wear-indicating protrusions 2 have already worn out completely.

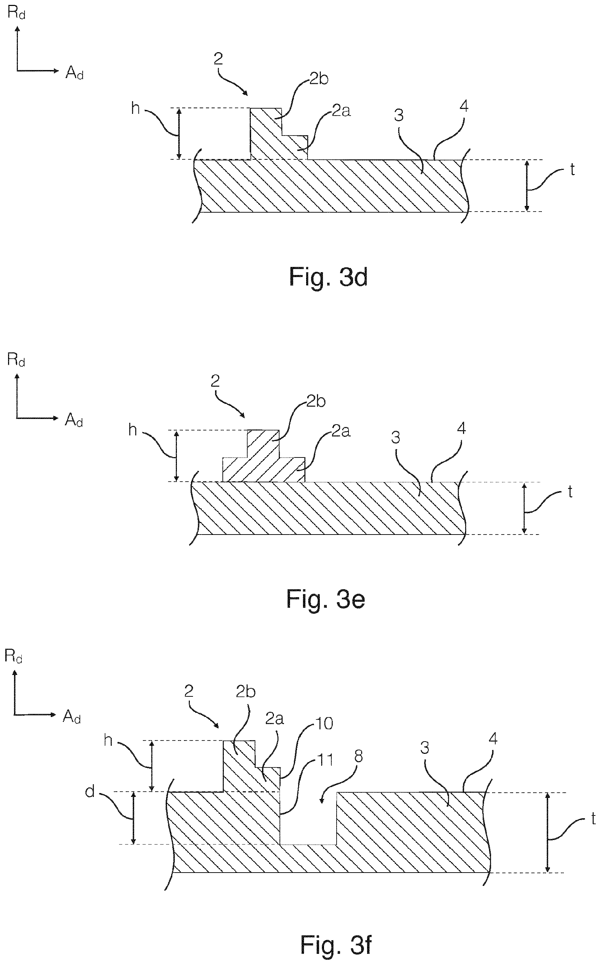

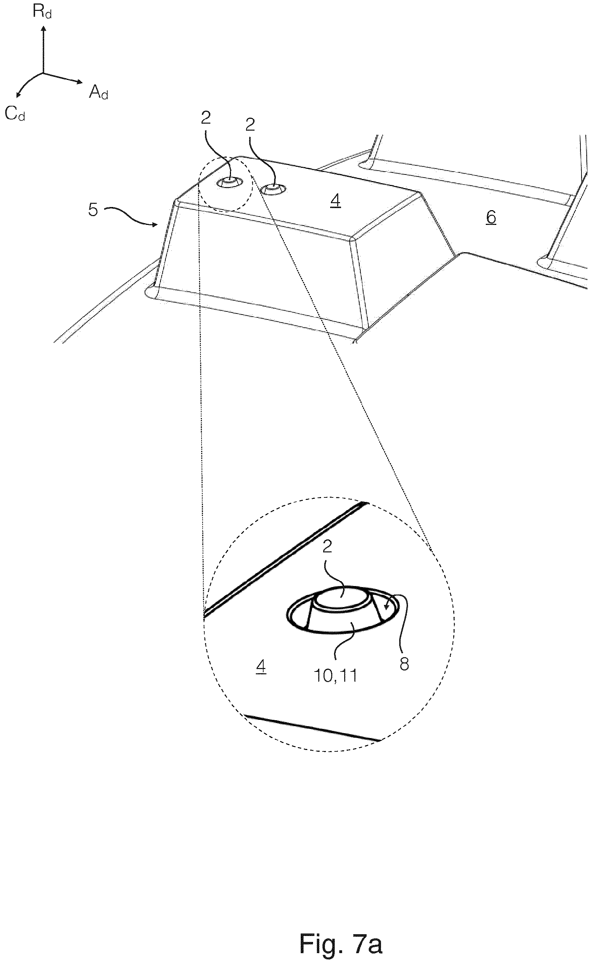

Towards this end, and now referring to Figs. 7a to 7c as well as 3c, 3f and 3h, adjacent to each wear-indicating protrusion 2 or group of wear-indicating protrusions 2, or at least one of the wear-indicating protrusions 2, there may be an indentation 8 extending radially inwards from the load-bearing surface 4. The indentation 8 thereby indicates that the wear-indicating protrusion 2 or group of wear-indicating protrusions 2 is nearby.

Preferably, the indentation 8 is formed such that there is no exposed load-bearing surface 4 between the wear-indicating protrusion 2 and the indentation 8 adjacent to it. In other words, in such a case, one of the radially extending side walls 10 of the protrusion 2 joins the radially extending side wall 11 of the respective adjacent indentation 8 in a continuous manner. Thereby, the indentation 8 may provide a visual marker of the location of the adjacent wear-indicating protrusion 2 also after the wear-indicating protrusion 2 has worn out completely.

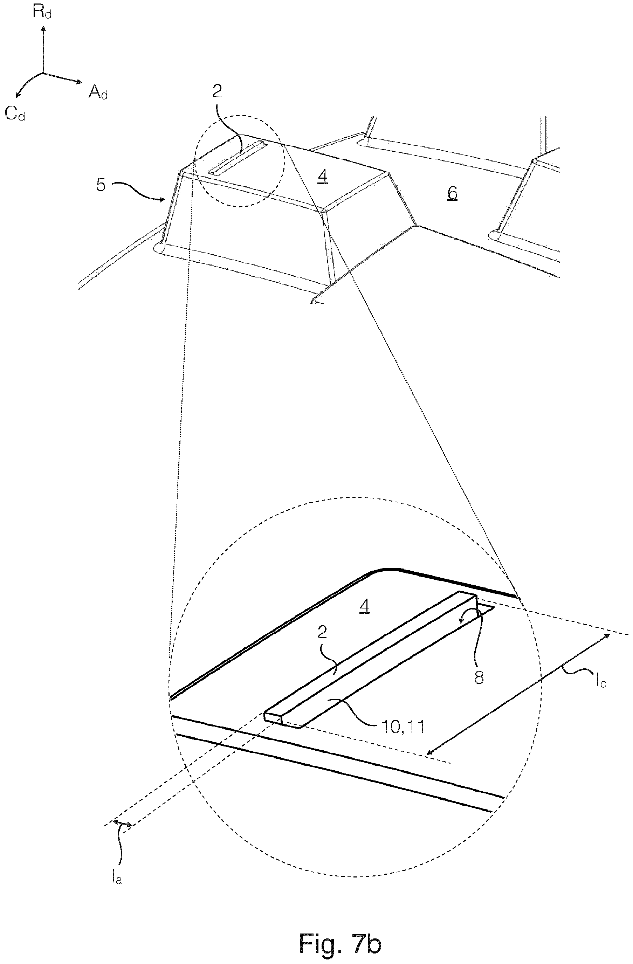

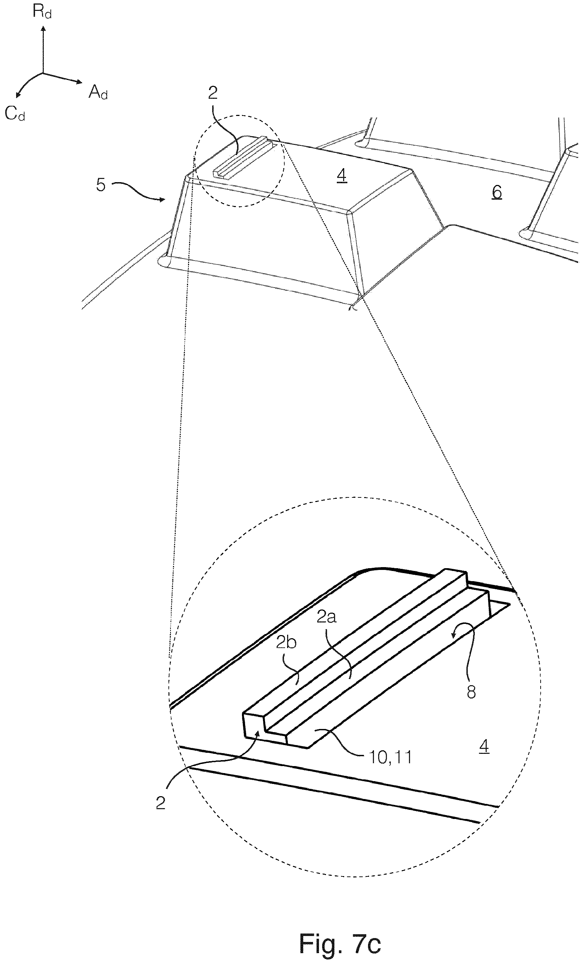

Preferably, as shown in Figs. 7a, 7b and 7c, the indentation 8 and the wear-indicating protrusion 2 or group of wear-indicating protrusions 2 adjacent to the indentation 8 are jointly on all sides encircled by the outer load-bearing surface 4.

However, for the above-mentioned indentation 8 to have only a minimal influence of the surface properties, for example traction properties, of the load-bearing surface 4, it is beneficial that the indentation 8 is minor with respect to its extent. Therefore, according to an example, the indentation 8 adjacent to the wear-indicating protrusion 2 may have a depth d at maximum twice the height h of the wear-indicating protrusion 2 in an unworn state, i.e. when new. According to another example, the depth d is not more than 0.4 mm to 4.0 mm. The depth d is measured from the load-bearing surface 4 radially inwards.

Therefore, the indentation 8 is not to be confused with possible grooves 6 in the tread 3, as illustratively distinguished in Fig. 3h. According to an example of the disclosed solution, if the tread 3 of the tyre 1 comprises grooves 6 to divide the load-bearing surface 4 into islands 5, such grooves 6 are deeper than the indentation 8 adjacent to the corresponding wear-indicating protrusion 2. Preferably, the wear-indicating protrusions 2 and indentations 8 are at a distance from any groove 6.

Now referring to Figs. 7a to 7c, in order to increase the visual information provided by the indentation 8 about the adjacent wear-indicating protrusion 2 - and in particular the worn-away protrusion 2 - it may be beneficial to configure the indentation 8 in such a manner that their shape and/or orientation are indicative of the respective shape and/or orientation of the adjacent protrusion 2. Therefore, the indentation 8 may have a shape similar to the shape of the wear-indicating protrusion 2 adjacent to it. Correspondingly, the orientation of the indentation 8 may be similar to the orientation of the wear-indicating protrusion 2 adjacent to it.

It is conceivable that in some applications it is desirable to be able to detect degree of wear of the wear-indicating protrusion 2, and thereby the wear behavior of the tyre 1, with greater resolution and with more visual ease. Towards this end, and now referring to Figs. 3d to 3f, 3h and 7c, the wear-indicating protrusion 2 - or alternatively either all of them or some of them - may be constructed in a stepwise manner, i.e. comprising two or more sections 2a, 2b, 2c stacked on top of each other in a stepped fashion.

Put differently, the wear-indicating protrusion 2 may comprise wear-indicating sections 2a, 2b, 2c including at least a first section 2a and a second section 2b such that the sections 2a, 2b reside radially outwards from the load-bearing surface 4, the second section 2b being radially more distant from the load-bearing surface 4 than the first section 2a. The first section 2a is thereby adapted to wear out after the second section 2b has worn out. With reference to Fig. 3h, the same principle of relations as outlined immediately above for the first section 2a and the second section 2b applies, mutatis mutandis, also for the second section 2b and the third section 2c (if any) and so on.

Despite comprising two or more sections 2a to 2c, the wear-indicating protrusion 2 may still be materially unitary, as illustrated according to examples in Figs. 3d to 3f and 3h. In other words, each section 2a, 2b, 2c is an integral part of the tread 3, thereby being of the same material as the tread 3.

In some applications of the disclosed solution, it may be desirable to detect and observe wear over a particular region of the load-bearing surface 4 of the tyre 1 instead of at a relatively localized location. Therefore, the wear-indicating protrusion 2 may have a length to a particular direction on the load-bearing surface 4 which length is longer than its length to other directions on the load-bearing surface 4. For example, the wear-indicating protrusion 2 may have an axial width la, i.e. in the axial direction Ad, and a circumferential length lc, i.e. in the circumferential direction Cd, such that the axial width la is greater than or a multiple of the circumferential length lc. As another preferable example, the wear-indicating protrusion 2 may have the axial width la and the circumferential length lc such that the circumferential length lc is greater than or a multiple of the axial length la, as is illustrated according to an example in Figs. 1 and 7b for example. According to an example, the circumferential length lc is 5, 10, 15, or 20 times the axial width la.

The wear-indicating protrusion 2 may be incorporated in the tyre 1 in such a manner that the wear-indicating protrusion 2 is an integral part of the tread 3, thereby being of the same material as the tread 3, as illustrated according to examples in Figs. 3a, 3c, 3d and 3f-3h. In such a case, the mold with which the tyre 1 is to be manufactured may be configured to incorporate an indentation to form such integral wear-indicating protrusion 2. Wear-indicating protrusions 2 which are integral parts of, and therefore are of the same material as the tread 3, have the benefit of having the substantially same wear rate as the tread 3 from the load-bearing surface 4 radially inwards.

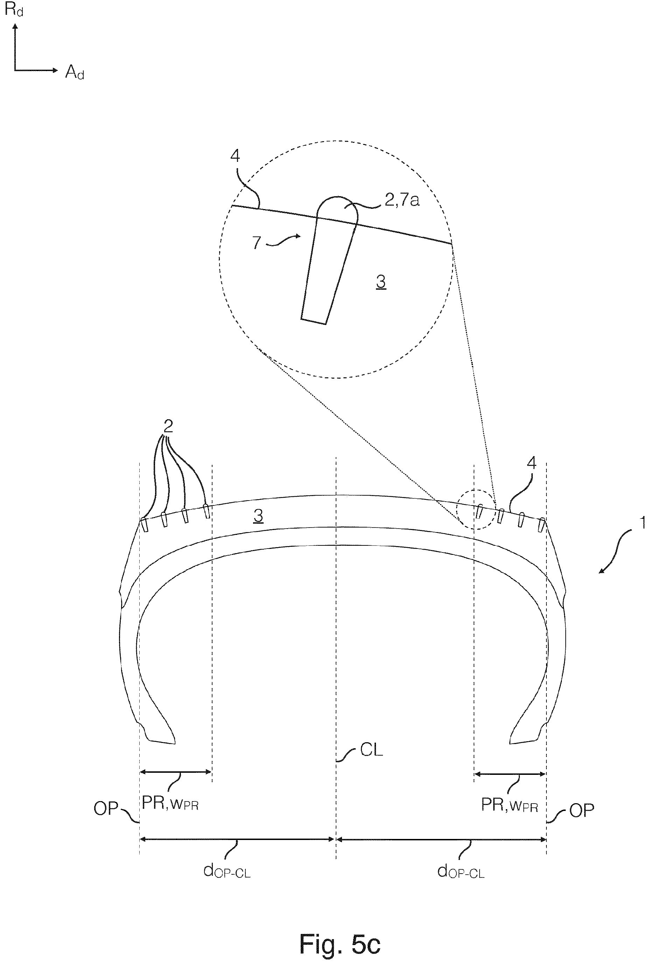

As an alternative possibility, and now referring to Figs. 3b and 5c, the wear-indicating protrusion 2 may be premised on an insert 7 inserted into the tread 3 in such a manner that a part of the insert 7, referred to as a protruding part 7a, constitutes the wear-indicating protrusion 2, i.e. that part of the insert 7 which protrudes radially outwards from the load-bearing surface 4 of the tread 3. In other words, and according to an example, the wear-indicating protrusion 2 may be that protruding part 7a of the insert 7 within the tread 3 which protrudes radially outwards from the load-bearing surface 4. In such a case, the tyre 1 may be manufactured, for example, as having suitable blind holes, or such blind holes may be manufactured, for example drilled, after the tyre 1 has been manufactured. Thereafter, the insert 7 may be inserted into the blind hole in accordance with the above. Such an insert-based arrangement has the benefit of, for example, enabling fitting each tyre 1 with an appropriate number of wear-indicating protrusions 2 at desired locations - even on a tyre-by-tyre basis so that each tyre 1 is differently configured in this regard.

As an additional possibility, and now referring to Fig. 3e, the tyre 1 may be equipped with the wear-indicating protrusions 2 which are not integral parts of the tread 3 nor inserts 7 but instead are distinct elements attached, for example adhesively, onto the load-bearing surface 4 of the tread 3. Such an attaching-based arrangement has the benefit of, for example, enabling fitting each tyre 1 with an appropriate number of wear-indicating protrusions 2 at desired locations - even on a tyre-by-tyre basis so that each tyre 1 is differently configured in this regard - without a need to have specific protrusion-producing molds or a need to arrange holes in the tyre 1.

It is conceivable that the tyre 1 may also comprise a combination of two or three of the above-mentioned wear-indicator types, i.e. two or three of the integral, insert-based and attached wear-indicating protrusions 2 in application-suitable numbers and mutual proportions.

For the wear-indicating protrusion 2 to be structurally rigid to reliably indicate wear of the tyre 1, it is advantageous that the axial width la and the circumferential length lc of the protrusion 2 are both greater than the protruding height h of the wear-indicating protrusion 2.

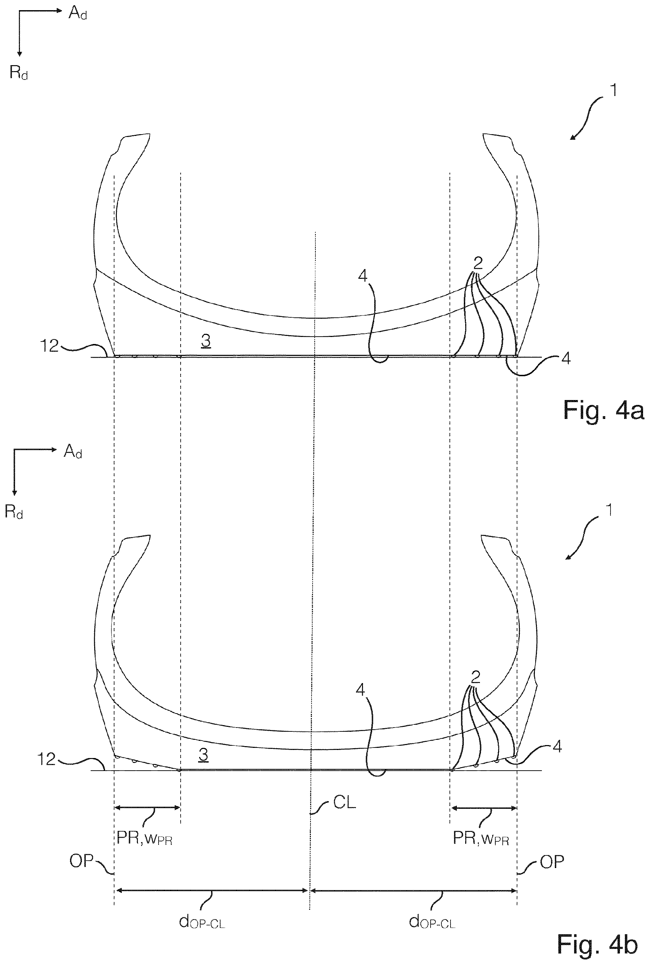

In consistency with what has been described earlier, the disclosed solution may productively be employed to detect inappropriately great inflation pressure - i.e. over-inflation - of the tyre 1. In such an over-inflation scenario, the tyre 1 has too great an inflation pressure in relation to the load it bears in which case the region of the load-bearing surface 4 in the vicinity of the axial outer perimeter OP may not be in contact with the ground 12. In this region, as already explained above, the tread 3 tends to curve away from the ground 12 when the tyre 1 is over-inflated when in use. If this is the case, as is illustrated in Fig. 4b, the tyre 1 may wear near and around the equatorial plane CL of the tread 3, whereas there is little or no wear at and in the vicinity of the axial outer perimeter OP of the tread 3, resulting in undesired uneven wear over the tread 3.

In contrast, when the tyre 1 is not over-inflated, the region of the load-bearing surface 4 in the vicinity of the axial outer perimeter OP is, in a normal usage scenario, in contact with the ground 12. If this is the case, as is illustrated in Fig. 4a, the tyre 1 most likely wears equally both near and around the equatorial plane CL of the tread 3 and in the vicinity of the axial outer perimeter OP of the tread 3, resulting in desired even wear over the tread 3.

Herein, it is to be appreciated that even and non-even wear as just discussed are not dependent on only the inflation pressure of the tyre 1 but instead the suitability of the inflation pressure in relation to the load the tyre 1 bears.

Therefore, and now referring to Figs. 4a to 4b and 5a to 5c, it may be useful, or at least may suffice, to arrange the wear-indicating protrusion 2 or group of wear-indicating protrusions 2 in that region of the load-bearing surface 4 which is in the vicinity of the axial outer perimeter OP, rather than in that region of the load-bearing surface 4 which is in the vicinity of the equatorial plane CL. In such a case, and according to an example, the load-bearing surface 4 comprises on one or both sides of the load-bearing surface 4 a protrusion-containing region PR with a width wPR from the respective outer perimeter OP towards the equatorial plane CL such that said width wPR is no more than 50%, or 25%, or no more than 10%, of the distance dOP-CL between the respective outer perimeter OP and the equatorial plane CL, and each wear-indicating protrusion 2 is arranged in one of the protrusion-containing regions PR.

In such a case, the wear-indicating protrusion 2 usefully provide indication of whether or not, or to what degree, the protrusion-containing region PR is in contact with the ground 12 which, in turn, is indicative of whether or not the tyre 1 is over-inflated or not in relation to the load it bears as explained above.

In some applications, it may be of interest to have indication of whether or how the tread 3 wears at different regions in the vicinity of the outer perimeters OP of the load-bearing surface 4. Towards this end, there may be a plurality of the wear-indicating protrusions 2, constituting e.g. the group of wear-indicating protrusions 2, arranged in the protrusion-containing regions PR such that the wear-indicating protrusions 2 reside along the axial direction Ad one after the other, for example equally spaced from each other, as is illustrated according to examples in Figs. 1 and 2. With such an arrangement it may be possible to identify that region of the load-bearing surface 4 whereafter towards the respective outer perimeter OP the load-bearing surface 4 is in too light or no contact with the ground 12. For a similar reason, as explained above in an example, two or more wear-indicating protrusions 2 or groups of wear-indicating protrusions 2 are in the axial direction Ad positioned at differing distances from the equatorial plane CL within the protrusion-containing region PR.

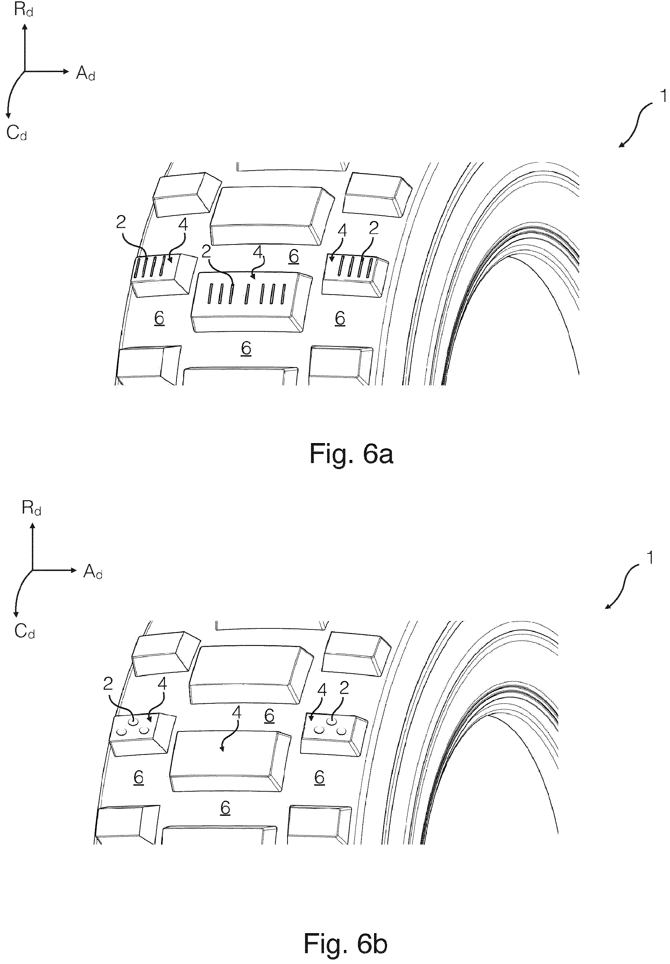

In an example of the presented solution, it may be of interest to have indication of how the tread 3 wears over the entire width of the load-bearing surface 4. Towards this end, there may be a plurality of the wear-indicating protrusions 2 or groups of wear-indicating protrusions 2 arranged over the entire width of the load-bearing surface 4, positioned in the axial direction Ad at differing distances from the equatorial plane CL, as is illustrated according to an example in Fig. 6a.

As already indicated earlier, and now referring to Figs. 1, 3g to 3h and 5b, the tread 3 of the tyre 1 may comprise one or more grooves 6. Such grooves 6 divide the tread 3, and particularly the load-bearing surface 4 of the tread 3, into islands 5. Consequently, the radially outermost surfaces of the islands 5 constitute the load-bearing surface 4 of the tyre 1. Thus, commonly used tyre-related terms "rib" and "tread block" herein refer to islands 5, as such "ribs" and "tread blocks" are separated from each other by the grooves 6.

Therefore, the tyre 1 according to the disclosed solution may be configured such that the tread 3 comprises at least one groove 6 extending radially inwards from the load-bearing surface 4 and dividing the load-bearing surface 4 into islands 5 separated from each other by said grooves 6 and each wear-indicating protrusion 2 or group of wear-indicating protrusions 2 is arranged on the load-bearing surface 4. Preferably, the wear-indicating protrusions 2, and the indentations 8, are at a distance from the grooves 6.

As another possibility, and now referring to Fig 2, the tyre 1 according to the disclosed solution may be configured such that the tread 3 comprises no such grooves 6, i.e. the tread 3 is devoid of such grooves 6 and, consequently, of distinct islands 5.

Whether or not the tyre 1 comprises any grooves 6, the principles for the wear-indicating protrusion 2 outlined above are applicable.

It is to be understood that the examples of the solution disclosed are not limited to the structures disclosed herein, but are extended to equivalents thereof as would be recognized by those skilled in the relevant art.

It should also be understood that terminology employed herein is used for the purpose of describing particular examples only and is not intended to be limiting. Reference throughout this specification to "one example " or "an example" means that a particular feature, structure, or characteristic described in connection with the example is included in at least one example of the present solution.

As used herein, a plurality of items or structural elements may be presented in a common list for convenience. However, these lists should be construed as though each member of the list is individually identified as a separate and unique member.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality, unless where specifically mentioned.

## Claims

1. A pneumatic vehicle tyre comprising a tread (3) extending around the tyre (1) in a circumferential direction (Cd) of the tyre and including an outer load-bearing surface (4) facing radially outwards and constituting a radially outermost ground-engaging surface of the tyre (1);
- wherein the outer load-bearing surface (4) defines in an axial direction (Ad) of the tyre (1) a width bounded by axial outer perimeters (OP) on both sides of the load-bearing surface (4);
- wherein the outer load-bearing surface (4) further defines an imaginary, radially extending equatorial plane (CL) that is perpendicular to the axial direction (Ad) and passes through a centre region of the tread (3); and
- wherein the outer load-bearing surface (4) comprises one or more wear-indicating protrusions (2) or groups of wear-indicating protrusions (2) extending radially outwards from the outer load-bearing surface (4) and thereby being adapted to be subject to wear immediately after the tyre (1) has been commissioned into use.

2. The pneumatic vehicle tyre according to claim 1, wherein at least one of the wear-indicating protrusions (2) or groups of wear-indicating protrusions (2) is nearer to one of the axial outer perimeters (OP) than the equatorial plane (CL) and thereby arranged in a region of the tread (3) tending to curve away from the ground when the tyre (1) is over-inflated when commissioned into use.

3. The pneumatic vehicle tyre according to claim 1 or 2, wherein each wear-indicating protrusion (2) has a protruding height (h) of at least 0.2 mm and not more than 2.0 mm, as measured from the load-bearing surface (4) radially outwards.

4. The pneumatic vehicle tyre according to any one of claims 1 to 3, wherein two or more of the wear-indicating protrusions (2) or groups of wear-indicating protrusions (2) are in the axial direction (Ad) positioned at differing distances from the equatorial plane (CL).

5. The pneumatic vehicle tyre according to any one of claims 1 to 4,
- wherein the outer load-bearing surface (4) comprises on one or both sides of the outer load-bearing surface (4) a protrusion-containing region (PR) with a width (wPR) from the outer perimeter (OP) towards the equatorial plane (CL) such that the width (wPR) is not more than 50% of the distance (dOP-CL) between the outer perimeter (OP) and the equatorial plane (CL); and
- wherein at least one of the wear-indicating protrusions (2) or groups of wear-indicating protrusions (2) is arranged in at least one of the protrusion-containing regions (PR).

6. The pneumatic vehicle tyre according to any one of claims 1 to 5, wherein each wear-indicating protrusion (2) or group of wear-indicating protrusions (2) is on all sides encircled by the outer load-bearing surface (4).

7. The pneumatic vehicle tyre according to any one of claims 1 to 5, wherein adjacent to at least one of the wear-indicating protrusions (2) or groups of wear-indicating protrusions (2) there is an indentation (8) extending radially inwards from the outer load-bearing surface (4), the indentation (8) thereby being adapted to indicate that the wear-indicating protrusion (2) or group of wear-indicating protrusions (2) is or has been located nearby.

8. The pneumatic vehicle tyre according to claim 7, wherein the wear-indicating protrusion (2) comprises a radially extending side wall (10) and the indentation (8) adjacent to the wear-indicating protrusion (2) comprises a radially extending side wall (11) that joins the side wall (10) of the wear-indicating protrusion (2) in a continuous manner.

9. The pneumatic vehicle tyre according to claim 7 or 8, wherein the indentation (8) and the wear-indicating protrusion (2) or group of wear-indicating protrusions (2) adjacent to the indentation (8) are jointly on all sides encircled by the outer load-bearing surface (4).

10. The pneumatic vehicle tyre according to any one of claims 7 to 9,
- wherein the shape of the indentation (8) is similar to the shape of the wear-indicating protrusion (2) adjacent to the indentation (8); and
- wherein the orientation of the indentation (8) is similar to the orientation of the wear-indicating protrusion (2) adjacent to the indentation (8).

11. The pneumatic vehicle tyre according to any one of claim 1 to 10, wherein at least one of the wear-indicating protrusions (2) comprises wear-indicating sections (2a, 2b, 2c) stacked on top of each other in a stepped fashion and including at least a first section (2a) and a second section (2b) such that
- the first and second sections (2a, 2b) reside radially outwards from the load-bearing surface (4), and
- the second section (2b) is radially more distant from the load-bearing surface (4) than the first section (2a), the first section (2a) thereby being adapted to wear out after the second section (2b) has worn out.

12. The pneumatic vehicle tyre according to any one of claims 1 to 11, wherein at least one of the wear-indicating protrusions (2) or each wear-indicating protrusion (2) of the group of wear-indicating protrusions (2) has an axial width (la) and a circumferential length (Ic) such that the circumferential length (Ic) is a multiple of the axial width (la) and the wear-indicating protrusion (2) substantially extends in the circumferential direction (Cd).

13. The pneumatic vehicle tyre according to any one of claims 1 to 12, wherein at least one of the wear-indicating protrusions (2) is a protruding part (7a) of an insert (7) within the tread (3) which protruding part (7a) protrudes radially outwards from the outer load-bearing surface (4).

14. The pneumatic vehicle tyre according to any one of claims 1 to 8, wherein the tread (3) further comprises at least one groove (6) extending radially inwards from the outer load-bearing surface (4) and dividing the outer load-bearing surface (4) into islands (5) separated from each other by said at least one groove (6), and wherein at least one of the wear-indicating protrusions (2) or groups of wear-indicating protrusions (2) is arranged on the outer load-bearing surface (4) on one or more of the islands (5).

15. The pneumatic vehicle tyre according to claim 14, wherein the wear-indicating protrusion (2) is at a distance from said at least one groove (6).
